# EUROPÄISCHE PATENTSCHRIFT

(11) **EP 3 521 642 B1**
(45) Veröffentlichungstag und Bekanntmachung des Hinweises auf die Patenterteilung: **14.07.2021**
(21) Anmeldenummer: 19154125.9
(22) Anmeldetag: 29.01.2019
(51) Int. Cl.: F16B 5/01, F16B 11/00, B25B 5/00, B25B 7/02, B25B 31/00

(54) **ANORDNEN EINES VERBUNDELEMENTS AN EINEM BAUTEIL**
ASSEMBLY OF A COMPOUND ELEMENT TO A CONNECTOR
AGENCEMENT D'UN ÉLÉMENT DE RACCORDEMENT SUR UN COMPOSANT

(30) Priorität: 02.02.2018 DE 102018102336
(43) Veröffentlichungstag der Anmeldung: 07.08.2019
(73) Patentinhaber: Elbe Flugzeugwerke GmbH, 01109 Dresden (DE)
(72) Erfinder: Knorr, Alexander, 01640 Coswig (DE); Hörich, Frank, 01109 Dresden (DE); Gärtner, Dr. Egbert, 01109 Dresden (DE)
(74) Vertreter: LKGLOBAL Lorenz & Kopf PartG mbB Patentanwälte

(56) Entgegenhaltungen:
- FR-A1- 2 681 003
- US-A- 3 339 609
- US-A- 4 800 643
- US-A- 5 093 957
- US-A- 5 147 167
- US-A1- 2006 170 142

## Beschreibung

### GEBIET DER ERFINDUNG

Die vorliegende Erfindung befasst sich mit einem Verfahren zum Anordnen wenigstens eines Verbundelements an einem Bauteil.

### HINTERGRUND DER ERFINDUNG

Bauteile, beispielsweise Stützkernverbundplatten, werden zum Zweck der Befestigung mit Einsätzen (engl. "insert") versehen. Das Fügen solcher meist zweiteiligen Einsätzen an einem Bauteil erfolgt üblicherweise mittels eines Hammers oder einer stationären Presse. Wenn ein solches Bauteil beispielsweise in einem Flugzeug verbaut werden soll, ist eine solche Installation von Einsätzen am Bauteil schwierig oder gar nicht möglich.

Sind die Bauteile Stützkernverbundplatten kommt hinzu, dass beim Fügen eines solchen Einsatzes die Stützkernverbundplatte durch diese Vorgehensweise leicht beschädigt werden kann. Zweiteilige Inserts, welche heute zum Beispiel im Bereich von Fußbodenplatten in Flugzeugen eingesetzt werden, müssen in der Montage zumeist mit einem Hammer oder unter einer stationären Presse gefügt werden.

Die US 5 147 167 A beschreibt eine Tülle für relativ weiche Platten, welche ein männliches und ein weibliches Element aufweist, die mechanisch ineinander eingreifen. Das männliche und das weibliche Element haben sich ergänzende, kegelstumpfförmige Oberflächen, die einen Flanschteil der Haut der Platte in eine sich ergänzende Rippe und Nut einklemmen und ablenken und diesen dabei festhalten und die Haut daran hindern, gegenüber der Tülle zu rutschen. Das männliche und das weibliche Element der Tülle werden durch einen relativ einfachen Montagevorgang formschlüssig miteinander verriegelt.

Die FR 2 681 003 A1 beschreibt ein Verfahren zum Zusammenfügen von zwei Bauteilen, von denen das erste vom Typ Sandwich mit zwei starken Häuten ist, zwischen denen ein Kern angeordnet ist, während das zweite aus Metall besteht. An einem Ende des ersten Bauteils ist eine Aussparung vorgesehen, so dass der Rand des Kerns gegenüber den jeweiligen Rändern der Häute eingerückt ist. Ein Ende des zweiten Bauteils wird so geformt, dass es in die in dem ersten Bauteil vorgesehene Aussparung eingreift. In die ineinander eingepassten Enden der Komponenten werden Querkanäle eingearbeitet. In die Querkanäle werden Tüllen bestehen aus einem ersten Teil und einem zweiten Teil von beiden Seiten eingesteckt und ein Klebematerial durch die Querkanäle in die Zwischenräume zwischen dem ersten Teil und dem zweiten Teil eingespritzt, wodurch das Klebematerial das erste Teil und das zweite Teil der Tülle miteinander verklebt.

Die US4800643A und die US5093957A zeigen andere Beispiele des Stands der Technik.

### ZUSAMMENFASSUNG DER ERFINDUNG

Es ist eine Aufgabe der vorliegenden Erfindung ein verbessertes Verfahren anzugeben, welches das Fügen eines oder mehrerer Inserts an einem Bauteil effizient, sicher und schnell ermöglicht.

Diese Aufgabe wird durch ein Verfahren zum Anordnen wenigstens eines Verbundelements an einem Bauteil nach dem unabhängigen Anspruch erreicht.

Gemäß der Erfindung wird ein Verfahren zum Anordnen wenigstens eines Verbundelements, dass wenigstens ein Hülsenelement und wenigstens ein Steckelement umfasst, an einem Bauteil angegeben. Das Verfahren umfasst folgende Schritte: Anordnen des Hülsenelements in einer Bohrung des Bauteils; Verbinden des Hülsenelements mit dem Steckelement, so dass das wenigstens eine Verbundelement ausgebildet wird; Einsetzen einer Einrastvorrichtung in das wenigstens eine Verbundelement, wobei die Einrastvorrichtung das Hülsenelement und das Steckelement zueinander ausrichtet und/oder zusammenfügt, wobei vor dem Anordnen des Hülsenelements ein Klebstoff in die Bohrung und/oder auf das Hülsenelement aufgebracht wird.

Das Verbundelement kann beispielsweise ein zweiteiliger Einsatz sein, insbesondere zum Fügen von Bauteilen in der Luftfahrt, und umfasst ein Hülsenelement und ein Steckelement. Das Hülsenelement wird in einer Bohrung des Bauteils, beispielsweise eine Fußbodenplatte in einem Flugzeug (meist als Stützkernverbundplatte/Sandwichplatte ausgebildet), angeordnet. Das Hülsenelement kann die Bohrung vollständig oder teilweise umfassen.

Das Hülsenelement wird mit dem Steckelement verbunden, so dass ein Verbundelement ausgebildet wird. Dabei wird das Steckelement in das Hülsenelement gesetzt bzw. in diesem angeordnet. Eine solche Verbindung kann zunächst lose sein, sodass das Steckelement aus dem Hülsenelement wieder herausgenommen werden kann.

Als nächstes wird eine Einrastvorrichtung in das wenigstens eine Verbundelement eingesetzt. Die Einrastvorrichtung ist dazu eingerichtet das Hülsenelement und das Steckelement zueinander auszurichten und/oder zusammenzufügen. Beispielsweise wird die Einrastvorrichtung das Hülsenelement und das Steckelement so zueinander ausrichten, dass diese im Wesentlichen parallel zur Bohrlochwandung ausgerichtet sind.

Eine Einrastvorrichtung kann beispielsweise ein Cleco Type Fastener beziehungsweise eine Heftnadel sein (ein Verbindungselement zum Verbinden von Bauteilen über Bohrungen, deren Vorspannkraft entweder federbelastet oder mittels Mutter und Gewindestift erzielt wird).

Das fertige Verbundelement kann dann seinerseits zum Befestigen des Bauteils oder zu anderen Zwecken verwendet werden.

Mit der Erfindung wird ein einfaches und effizientes Verfahren zum Anordnen wenigstens eines Verbundelements an einem Bauteil angegeben. Mögliche Beschädigungen an den Sandwichplatten durch Setzen von Verbundelementen wie im Stand der Technik sind mit dem erfindungsgemäßen Verfahren nahezu ausgeschlossen. Außerdem ist das Verfahren für jedes Verbundelement gleich reproduzierbar, so dass mehrere an einem Bauteil angeordnete Verbundelemente im Wesentlichen identisch sind.

Gemäß einem Beispiel bringt die Einrastvorrichtung eine Vorspannung in das Verbundelement ein. Durch das Übertragen der Vorspannung auf das Verbundelement wird dessen Steckelement mit dem Hülsenelement verbunden. Die Vorspannung kann für alle Einrastvorrichtungen vorgegeben werden.

Gemäß der Erfindung wird vor dem Anordnen des Hülsenelements ein Klebstoff in die Bohrung und/oder auf das Hülsenelement aufgebracht. Der Klebstoff ist beispielsweise ein hochfester Epoxid-Klebstoff. Der Klebstoff kann als Klebeschicht aufgebracht oder eingebracht werden. Durch den Klebstoff wird ein frühes herausfallen des Verbundelementes verhindert, beispielsweise bevor die Einrastvorrichtung in das Verbundelement einsetzt ist. Des Weiteren, verhindert der Klebstoff das Eindringen von Fluiden, bspw. Wasser, Reinigungsmittel, Verunreinigungen etc., welche das Bauteil von Innen beschädigen könnten.

Gemäß einem Beispiel wird vor dem Anordnen des Steckelements auch auf das Steckelement ein Klebstoff aufgebracht.

Gemäß einem Beispiel weist die Einrastvorrichtung einen selbst-sichernden Mechanismus oder einen Anschraub-Mechanismus auf. Durch einen solchen Mechanismus wird gewährleistet, dass die Einrastvorrichtung im Verbundelement verbleibt.

Gemäß einem Beispiel wird die Einrastvorrichtung in das Hülsenelement oder in das Steckelement eingesetzt. Für die meisten Bauteile wird die Einrastvorrichtung in das Steckelement eingesetzt, wobei dieses zuvor im Hülsenelement angeordnet wurde, welches seinerseits in einer Bohrung des Bauteils angeordnet wurde. Es ist jedoch auch möglich zuerst das Steckelement in der Bohrung anzuordnen, die Einrastvorrichtung in der Steckelement einzusetzen und erst danach das Hülsenelement in der Bohrung anzuordnen und mit dem Steckelement zu verbinden. Die Einrastvorrichtung kann in das Hülsenelement eingesetzt werden, beispielsweise ist dies bei einer zweiteiligen Einrastvorrichtung der Fall, wenn ein Teil der Einrastvorrichtung als Gegenlager ausgebildet ist, wenn das Hülsenelement und/oder das Steckelement die Bohrung der Länge nach nur teilweise ausfüllen. Mit anderen Worten bei dicken Bauteilen, deren Dicke die Länge des Hülsen- oder Steckelementes überschreitet, kann eine zweiteilige Einrastvorrichtung eingesetzt werden.

Gemäß einem Beispiel wird das Hülsenelement an einer Seite der Bohrung angeordnet wird und das Steckelement auf der gegenüberliegenden Seite der Bohrung angeordnet.

Gemäß einem Beispiel weist das Hülsenelement und/oder das Steckelement einen Flansch auf. Durch den Flansch ist das Anordnen und Verbleiben des Hülsen- oder Steckelementes in der Bohrung des Bauteils gewährleistet. In manchen Ausführungsbeispielen wird auch der Flansch des Hülsenelements und/oder Steckelements mit einem Klebstoff oder Klebeschicht versehen. In manchen Ausführungsbeispielen kann der Flansch des Hülsenelements und/oder Steckelements auch frei von Klebstoff sein.

Gemäß einem Beispiel ist die Einrastvorrichtung als Führungsvorrichtung für das wenigstens eine Verbundelement ausgebildet. In manchen Ausführungsbeispielen kann die Einrastvorrichtung das Hülsenelement oder das Steckelement in die Bohrung des Bauteils führen. Dies kann sowohl ein Einsetzen als auch ein Ausrichten des Hülsenelements oder des Steckelements umfassen.

Gemäß einem Beispiel weist die Einrastvorrichtung eine Federkraft auf. Beispielsweise kann dies eine Feder/Federung sein. Die Federkraft kann mechanisch oder mittels Fluiden oder Gasen oder einem gemischten Wirkprinzip ausgeführt sein. Die Federlast kann definiert oder undefiniert sein. Bei manchen Einrastvorrichtungen, deren Feder vorgespannt ist, kann die Federkraft sehr eng spezifiziert werden und beispielsweise an die Anforderungen des Bauteils (weich, hart) angepasst werden. Dadurch wird das Anordnen eines oder mehrerer Verbundelement ein sehr reproduzierbarer Prozess. Das Gleiche gilt für jede Art von Federkraft der Einrastvorrichtung.

Es sei darauf hingewiesen, dass die Merkmale der Ausführungsbeispiele des Systems auch für Ausführungsformen des Kabinensegments sowie des Fahrzeugs gelten und umgekehrt. Außerdem können auch diejenigen Merkmale frei miteinander kombiniert werden, bei denen dies nicht explizit erwähnt ist.

Diese und weitere Aspekte der Erfindung werden unter Bezugnahme und mit Verweis auf die folgenden Ausführungen ersichtlich.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: ein Verbundelement gemäß dem erfinderischen Verfahren;
- Fig. 2: ein an einem Bauteil angeordnetes Verbundelement;
- Fig. 3: zwei beispielhafte Einrastvorrichtungen;
- Fig. 4: eine der Einrastvorrichtungen aus Fig. 3 mit Verbundelement;
- Fig. 5: eine weitere der Einrastvorrichtungen aus Fig. 3 mit Verbundelement;
- Fig. 6: eine Einrastvorrichtung beim Einsetzen in ein Verbundelement;
- Fig. 7: eine eingesetzte Einrastvorrichtung; und
- Fig. 8: die eingesetzte Einrastvorrichtung aus Fig. 7.

### DETAILLIERTE BESCHREIBUNG VON AUSFÜHRUNGSFORMEN

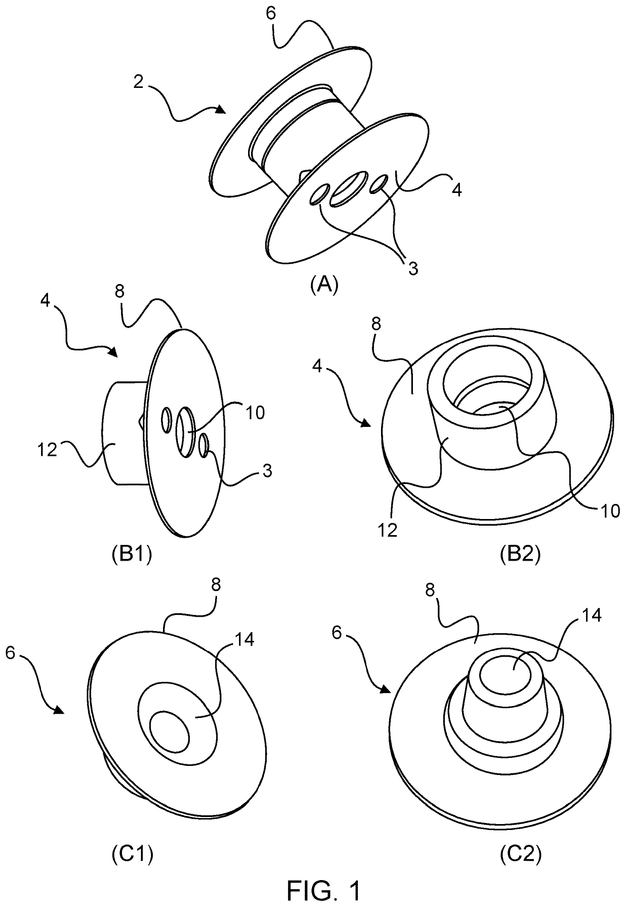

Fig. 1 zeigt ein Verbundelement 2 gemäß dem erfinderischen Verfahren. Das Verbundelement 1 ist in einer perspektivischen Ansicht (A) in einem zusammengefügten Zustand gezeigt: das Hülsenelement 4 ist verbunden mit dem Steckelement 6.

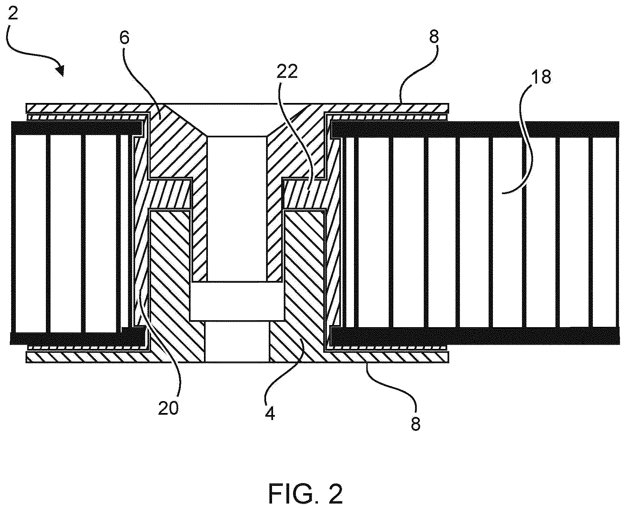

Das Hülsenelement 4 weist kleine Bohrungen 3 auf, welche zum Einbringen von Klebstoff zwischen die Außenwandung des Hülsenelements 4 und eines umgebenden Stützkerns eines Bauteils 18 sowie dessen obere und untere Decklage (s. Figur 2) dienen.

Ansichten (B1), (B2) zeigen das Hülsenelement 4 in perspektivischer Ansicht. Ansicht (B1) zeigt einen Flansch 8 und eine Hülsenöffnung 10 des Hülsenelements 4. Ansicht (B2) zeigt eine perspektivische Draufsicht des Hülsenelements 4. Der Flansch 8 und die Hülsenöffnung 10 sind gezeigt. Die rohrförmige Hülse 12 ist ausgebildet das Steckelement 6 aufzunehmen.

Ansichten (C1), (C2) zeigen das Steckelement 6 in perspektivischer Ansicht. Ansicht (C1) zeigt den Flansch 8 und eine äußere Öffnung 14 des Steckelements 6. Ansicht (C2) zeigt eine perspektivische Draufsicht des Steckelements 6. Der Flansch 8 und die äußere Öffnung 14 sind gezeigt. Das Steckelement 6 weist einen Steckkopf 16 auf, der sich mit der rohrförmigen Hülse 12 des Hülsenelements 4 verbindet und das Verbundelement 2 ausbildet.

Das Verbundelement 2 in diesem Beispiel ist aus Titan gefertigt. Es ist möglich auch Verbundelemente 2 aus anderen Materialien (z.B. Aluminium, Stahl, Kunststoff) zu verwenden.

Das gezeigte Verbundelement 2 ist nur beispielhaft. Weitere Formen sind möglich.

Fig. 2 zeigt ein an einem Bauteil 18 angeordnetes Verbundelement 2. Das Verbundelement 2 weist das Hülsenelement 4 und das Steckelement 6 auf. Das Steckelement 6 ist mit dem Hülsenelement 4 verbunden. Das Bauteil 18 weist einen Stützkern (schraffiert) sowie eine obere und untere Decklage auf.

Das Bauteil 18 weist eine Bohrung 20 auf. In diesem Ausführungsbeispiel wurde ein Klebstoff 22 auf das Hülsenelement 4, seinen Flansch 8, das Steckelement 6 und seinen Flansch 8 aufgebracht. Der Klebstoff 22 sichert das Verbundelement 2 gegen frühzeitiges Herausfallen aus der Bohrung 20. Der Klebstoff 22 hat eine Schutzfunktion gegen Eindringen von Wasser, Reinigungsmittel oder Verunreinigungen in das Bauteil.

Der Klebstoff 22 kann über die kleinen Bohrungen 3 des Hülsenelements 4 (vgl. Figur 1) zwischen die Außenwandung des Hülsenelements 4 und des umgebenden Stützkerns des Bauteils 18 sowie dessen obere und untere Decklage eingebracht werden.

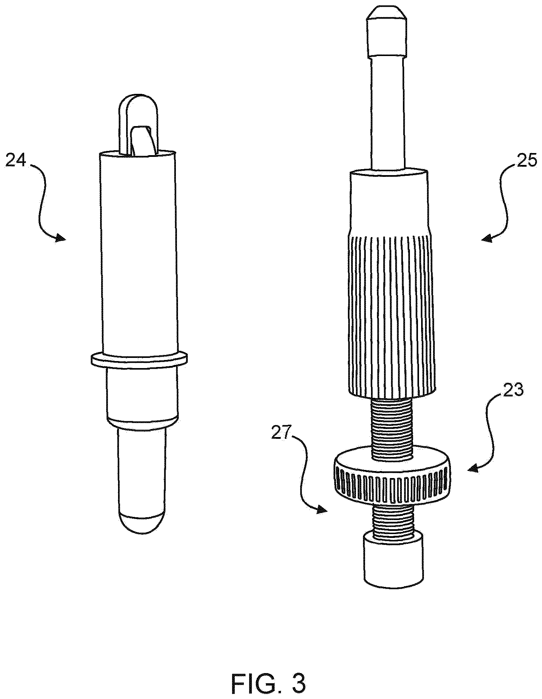

Fig. 3 zeigt zwei beispielhafte Einrastvorrichtungen 24, 25. Die Einrastvorrichtung 24 weist einen selbst-sichernden Mechanismus auf. Die Einrastvorrichtung 25 weist einen Anschraub-Mechanismus auf. Die Einrastvorrichtung 24, 25 weist jeweils eine Vorspannkraft auf. Diese ist federbelastet, wie bei der Einrastvorrichtung 24 oder wird mittels Mutter 23 und Gewindestift 27 erzielt, wie bei Einrastvorrichtung 25.

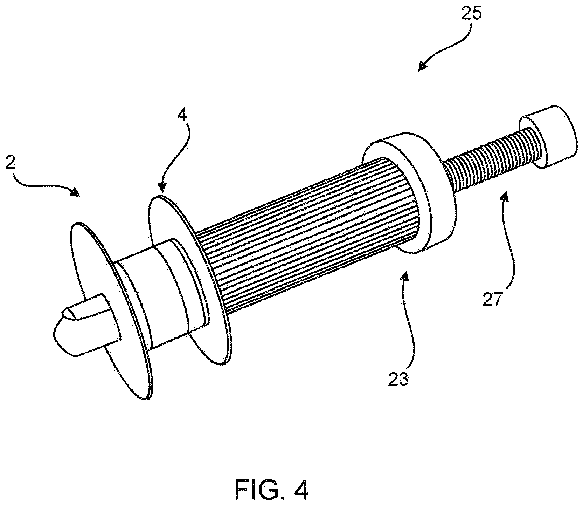

Fig. 4 zeigt die Einrastvorrichtungen 25 aus Fig. 3 eingesetzt in ein Verbundelement 2. Die Einrastvorrichtung 25 erstreckt sich durch das Hülsenelement 4 des Verbundelements 2. Mittels Mutter 23 und Gewindestift 27 wird die Vorspannung der Einrastvorrichtung 25 auf das Verbundelement 2 übertragen. Das Verbundelement 2 wird in einer nicht gezeigten Bohrung eines Bauteils ausgerichtet und zusammengefügt.

Durch das Einsetzen der Einrastvorrichtung 25 in das Verbundelement 2 wird diesem eine ausreichende Montagefestigkeit verliehen (vgl. auch die folgenden Figuren). Dabei kann die Richtung aus der die Einrastvorrichtung 25 eingesetzt wird vernachlässigt werden.

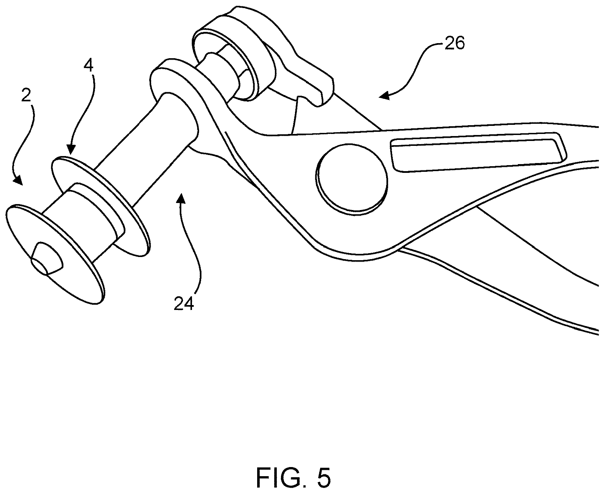

Fig. 5 zeigt die weitere der Einrastvorrichtungen 24 aus Fig. 3 mit Verbundelement 2. Diese Einrastvorrichtung 24 wird mittels eines Einrastwerkzeugs 26 gehalten und in das Steckelement 6 der Verbundelements 2 eingesetzt. Auch durch Einsetzen dieser Einrastvorrichtung 24 in das Verbundelement 2 wird diesem eine ausreichende Montagefestigkeit verliehen (vgl. auch die folgenden Figuren). Dabei kann die Richtung aus der die Einrastvorrichtung 24 in das Verbundelement 2 eingesetzt wird vernachlässigt werden.

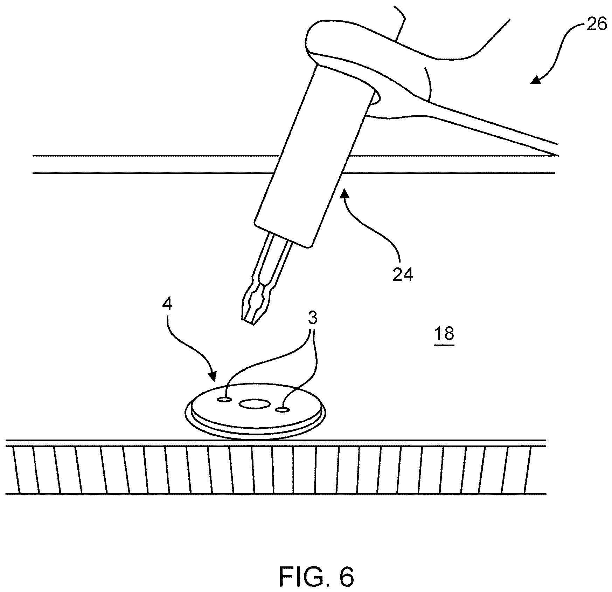

Fig. 6 zeigt eine Einrastvorrichtung 24 beim Einsetzen in ein Verbundelement 2. Die Einrastvorrichtung 24 wird in das Hülsenelement 4 des Verbundelements 2 eingesetzt. Die Einrastvorrichtung 24 weist eine Vorspannung auf, die in das Steckelement 6 eingebracht wird, wenn die Einrastvorrichtung 24 eingesetzt ist.

Das Verbundelement 2 wird in einer Bohrung des Bauteils 18 ausgerichtet und zusammengefügt. Über die kleinen Bohrungen 3 kann Klebstoff zwischen die Außenwandung des Hülsenelements 4 und des umgebenden Stützkerns des Bauteils 18 eingebracht werden (vgl. auch Figur 2).

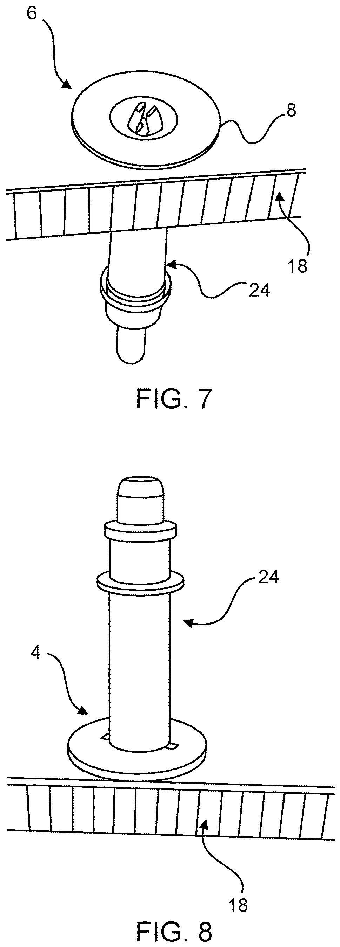

Fig. 7 zeigt eine eingesetzte Einrastvorrichtung 24 in ein Verbundelement 2 welches in einem Bauteil 18 angeordnet ist.

In einer Draufsicht ist das Steckelement 6 gezeigt welches im Bauteil 18 angeordnet ist. In diesem Ausführungsbeispiel wird die Einrastvorrichtung 24 in das Hülsenelement 4 eingesetzt und erstreckt sich durch das Steckelement 6.

Fig. 8 zeigt in einer Draufsicht die Einrastvorrichtung 24 aus Fig. 7, wie sie in das Hülsenelement 4 eingesetzt ist.

Die oberhalb beschriebenen Ausführungsbeispiele können in unterschiedlicher Art und Weise kombiniert werden. Insbesondere können auch Aspekte des Verfahrens für Ausführungsformen der Vorrichtungen verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Verfahren zum Anordnen wenigstens eines Verbundelements (2) an einen Bauteil (18), wobei das wenigstens eine Verbundelement (2) wenigstens ein Hülsenelement (4) und wenigstens ein Steckelement (6) umfasst, wobei das Verfahren folgende Schritte umfasst:
a) Anordnen des Hülsenelements (4) in einer Bohrung (20) des Bauteils (18);
b) Verbinden des Hülsenelements (4) mit dem Steckelement (6), so dass das wenigstens eine Verbundelement (2) ausgebildet wird;
c) Einsetzen einer Einrastvorrichtung (24, 25) in das wenigstens eine Verbundelement (2),
wobei die Einrastvorrichtung (24, 25) das Hülsenelement (4) und das Steckelement (6) zueinander ausrichtet und/oder zusammengefügt, **dadurch gekennzeichnet, dass** vor dem Anordnen des Hülsenelements (4) ein Klebstoff in die Bohrung (20) und/oder auf das Hülsenelement (4) aufgebracht wird.

2. Verfahren nach Anspruch 1, wobei die Einrastvorrichtung (24, 25) eine Vorspannung in das Verbundelement (2) einbringt.

3. Verfahren nach einem der Ansprüche 1 - 2, wobei vor dem Anordnen des Steckelements (6) ein Klebstoff auf das Steckelement (6) aufgebracht wird.

4. Verfahren nach einem der Ansprüche 1 - 3, wobei die Einrastvorrichtung (24, 25) einen selbst-sichernden Mechanismus oder einen Anschraub-Mechanismus aufweist.

5. Verfahren nach einem der Ansprüche 1 - 4, wobei die Einrastvorrichtung (24, 25) in das Hülsenelement (4) oder in das Steckelement (6) eingesetzt wird.

6. Verfahren nach einem der Ansprüche 1 - 5, wobei das Hülsenelement (4) an einer Seite der Bohrung (20) angeordnet wird und das Steckelement (6) auf der gegenüberliegenden Seite der Bohrung (20) angeordnet wird.

7. Verfahren nach einem der Ansprüche 1 - 6, wobei das Hülsenelement (4) und/oder das Steckelement (6) einen Flansch (8) aufweist.

8. Verfahren nach einem der Ansprüche 1 - 7, wobei die Einrastvorrichtung (24, 25) als Führungsvorrichtung für das wenigstens eine Verbundelement (2) ausgebildet ist.

9. Verfahren nach einem der Ansprüche 1 - 8, wobei die Einrastvorrichtung (24, 25) eine Federkraft aufweist.

## Claims

1. A method for arranging at least one composite element (2) on a component (18), said at least one composite element (2) comprising at least one sleeve element (4) and at least one plug element (6), said method comprising the following steps:
a) placing the sleeve element (4) in a bore (20) of the component (18);
b) connecting the sleeve element (4) to the plug element (6) so that the at least one composite element (2) is formed;
c) inserting a engagement device (24, 25) into the at least one composite element (2),
wherein the engagement device (24, 25) aligns and/or joins the sleeve element (4) and the plug element (6) to each other,
**characterised in that** an adhesive is applied into the bore (20) and/or onto the sleeve element (4) before the sleeve element (4) is placed.

2. The method according to claim 1, wherein the engagement device (24, 25) introduces a bias into the composite element (2).

3. The method according to any one of claims 1 to 2, wherein an adhesive is applied to the plug element (6) prior to arranging the plug element (6).

4. The method according to any one of claims 1 to 3, wherein the engagement device (24, 25) comprises a self-locking mechanism or a screw-on mechanism.

5. The method according to any one of claims 1 to 4, wherein the engagement device (24, 25) is inserted into the sleeve element (4) or into the plug element (6).

6. The method according to any one of claims 1 to 5, wherein the sleeve element (4) is disposed on one side of the bore (20) and the plug element (6) is disposed on the opposite side of the bore (20).

7. The method according to any one of claims 1 to 6, wherein the sleeve element (4) and/or the plug element (6) comprises a flange (8).

8. The method according to any one of claims 1 to 7, wherein the engagement device (24, 25) is designed as a guide device for the at least one composite element (2).

9. The method according to any one of claims 1 to 8, wherein the engagement device (24, 25) includes a spring force.

## Revendications

1. Un procédé pour agencer au moins un élément composite (2) sur un composant (18), dans lequel le au moins un élément composite (2) comprenant au moins un élément de manchon (4) et au moins un élément de bouchon (6), dans lequel le procédé comprenant les étapes suivantes:
a) disposer le élément de manchon (4) dans un alésage (20) du composant (18);
b) relier le élément de manchon (4) à le élément de bouchon (6) de sorte que le au moins un élément composite (2) soit formé;
c) insérer un dispositif de engagement (24, 25) dans le au moins un élément composite (2),
dans lequel le dispositif de engagement (24, 25) aligne et/ou joint le élément de manchon (4) et le élément de bouchon (6),
**caractérisé en ce qu'**un adhésif est appliqué dans l'alésage (20) et/ou sur le élément de manchon (4) avant de disposer le élément de manchon (4).

2. Le procédé selon la revendication 1, dans lequel le dispositif de engagement (24, 25) applique une tension initiale à le élément composite (2).

3. Le procédé selon l'une quelconque des revendications 1 à 2, dans lequel un adhésif est appliqué sur le élément de bouchon (6) avant de disposer le élément de bouchon (6).

4. Le procédé selon l'une quelconque des revendications 1 à 3, dans lequel le dispositif de engagement (24, 25) comprend un mécanisme autobloquant ou un mécanisme à vis.

5. Le procédé selon l'une quelconque des revendications 1 à 4, dans lequel le dispositif de engagement (24, 25) est inséré dans le élément de manchon (4) ou dans le élément de bouchon (6).

6. Le procédé selon l'une quelconque des revendications 1 à 5, dans lequel le élément de manchon (4) est disposé sur un côté de le alésage (20) et le élément de bouchon (6) est disposé sur le côté opposé de le alésage (20).

7. Le procédé selon l'une quelconque des revendications 1 à 6, dans lequel le élément de manchon (4) et/ou le élément de bouchon (6) comprend une bride (8).

8. Le procédé selon l'une quelconque des revendications 1 à 7, dans lequel le dispositif de engagement (24, 25) est configuré comme un dispositif de guidage de le au moins un élément composite (2).

9. Le procédé selon l'une quelconque des revendications 1 à 8, dans lequel le dispositif de engagement (24, 25) comprend une force du ressort.
